# EUROPEAN PATENT SPECIFICATION

(11) **EP 3 176 040 B1**
(45) Date of publication and mention of the grant of the patent: **19.06.2019**
(21) Application number: 16201559.8
(22) Date of filing: 30.11.2016
(51) Int. Cl.: B60R 19/02, B60R 21/34

(54) **VEHICLE FRONT STRUCTURE**
FAHRZEUGVORDERSTRUKTUR
STRUCTURE AVANT DE VÉHICULE

(30) Priority: 02.12.2015 JP 2015235890
(43) Date of publication of application: 07.06.2017
(73) Proprietor: Mitsubishi Jidosha Kogyo K.K., Tokyo 108-8410 (JP); Mitsubishi Jidosha Engineering K.K., Aichi 444-8501 (JP)
(72) Inventor: Terachi, Ryohei, Tokyo 108-8410 (JP); Taira, Kensuke, Okazaki-shi Aichi 444-8501 (JP)
(74) Representative: Vossius & Partner Patentanwälte Rechtsanwälte mbB

(56) References cited:
- EP-A1- 1 219 499
- EP-A2- 1 757 489
- EP-A2- 2 834 106
- WO-A1-2012/073621
- WO-A1-2012/169293
- US-A1- 2002 063 433
- US-A1- 2010 244 481

## Description

### TECHNICAL FIELD

The present disclosure relates to a vehicle front structure for protecting pedestrians.

### BACKGROUND

In recent years, improved vehicle front structures are designed taking account of safety of pedestrians.

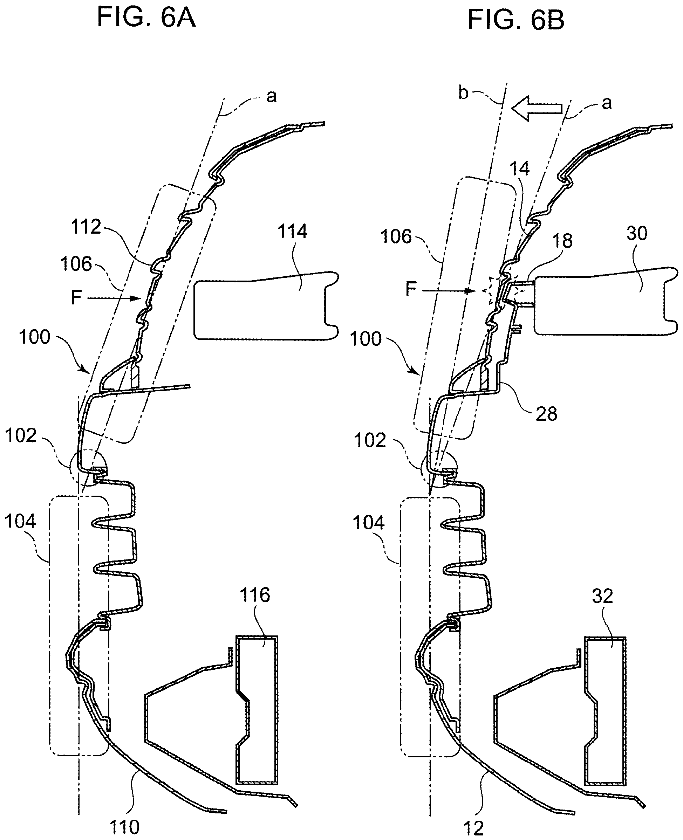

As depicted in FIG. 6A, if a bumper 110 protrudes forward from a radiator grille 112 disposed above the bumper 110 and is substantially level with a knee part 102 of a pedestrian 100, no vehicle member exists to support an upper-leg part 106 above the knee part 102 when the bumper 110 comes into contact with the knee part 102 of the pedestrian 100. Thus, the upper-leg part 106 may lean toward the rear side of the vehicle body about the joint of the knee part 102 relative to a lower-leg part 104.

Accordingly, a ligament of the knee part 102 may extend excessively and get damaged.

In FIG. 6A, the leaning angle of the upper-leg part 106 is indicated by angle "a". Furthermore, side members 114 having a high rigidity are disposed as vehicle-body frame members behind the radiator grille 112 with respect to the vehicle body, while a cross member 116 having a high rigidity is disposed as a vehicle-body frame member behind the bumper 110 with respect to the vehicle body.

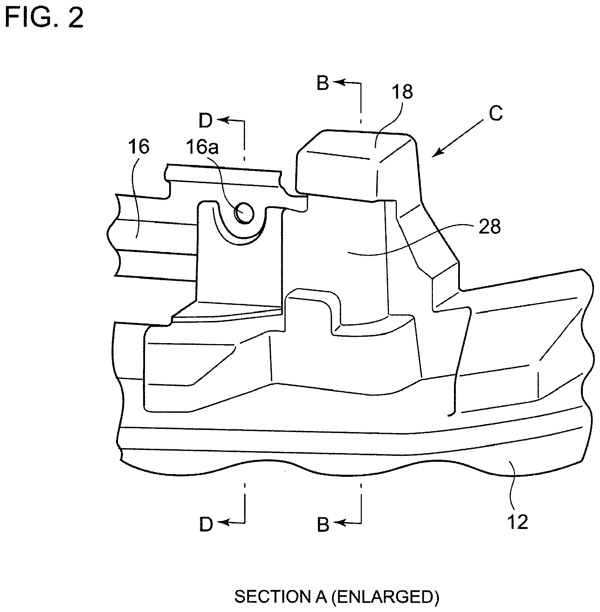

FIGs. 6A and 6B correspond to cross-sectional views taken along line B-B in FIG. 2.

To solve the above problem, Patent Document 1, JP2012-116351A, discloses a configuration in which a support member that extends in the vehicle-width direction and protrudes forward with respect to the vehicle body from a radiator-core support member is disposed above a bumper. In this way, in case a leg part of a pedestrian hits a vehicle front-edge section, an upper-leg part of the pedestrian comes into contact with the support member, and thereby the upper-leg part of the pedestrian is prevented from leaning toward the rear side of the vehicle body about the joint of the knee part.

WO 2013/150311 A2 describes a vehicle assembly, comprising a vehicle grille and one or more fenders. The vehicle grille is displaceable relative to the fenders, wherein in a first position of the grille, the grille provides support to at least a part of the one or more fenders and wherein in a second position, said support is reduced, and wherein the vehicle grille includes one or more coupling means for releasably coupling the grille to the fenders, the coupling means being configured, in use, to decouple the grille from the fenders, releasing the fenders for movement, when the coupling means is subjected to a predetermined load.

### SUMMARY

In the technique disclosed in Patent Document 1 (JP2012-116351A), the support member protruding forward with respect to the vehicle body extends in the vehicle-width direction, which leads to an increase in the weight and modification of the vehicle front structure, and thus designing of the vehicle front structure may be restricted.

In view of the above technical problems, an object of at least one embodiment of the present invention is to provide a vehicle front structure whereby it is possible to suppress damage to a knee part of a pedestrian with a simple structure and at low cost.

A vehicle front structure according to at least one embodiment of the present invention includes: a bumper disposed on a front section of a vehicle body so as to extend in a vehicle-width direction; a radiator grille disposed above the bumper and behind the bumper with respect to the vehicle body; a grille support member disposed behind the radiator grille with respect to the vehicle body and supporting the radiator grille; a shock absorbing portion disposed on each side of the grille support member in the vehicle-width direction and behind the radiator grille with respect to the vehicle body, and configured to support the radiator grille against a load applied from front of the vehicle body and to absorb the load by receiving the load while deforming so as to squash; and a vehicle-body frame member disposed behind the shock-absorbing portion with respect to the vehicle body, and configured to support the shock-absorbing portion against a load applied to the shock-absorbing portion from front.

With the above configuration, the radiator grille is supported by the shock-absorbing portion from behind with respect to the vehicle body, and thus it is possible to reduce the deformation amount of the radiator grille in response to a load applied from the front of the vehicle body.

Thus, even if a leg part of a pedestrian hits the front-edge section of the vehicle and an upper-leg part of the pedestrian comes into contact with the radiator grille, it is possible to suppress leaning of the upper-leg part of the pedestrian toward the rear side of the vehicle body about the joint of the knee part.

Accordingly, it is possible to suppress extension of the knee part including a ligament, and to suppress damage to the knee part.

Furthermore, the shock-absorbing portion absorbs shock through an effect of deformation in response to a load applied via the radiator grille, and thus it is possible to mitigate shock applied to the upper-leg part as a reaction force of the shock-absorbing portion. Furthermore, the shock-absorbing portion has a configuration such that the deformation amount in response to an applied load is controllable, and thus it is possible to mitigate shock applied to a leg part of a pedestrian regardless of the magnitude of the load applied to the shock-absorbing portion.

Furthermore, the vehicle-body frame member (e.g. a high-rigidity member such as a side frame disposed in the vehicle front-rear direction, and a cross member disposed in the vehicle-width direction) supports the shock-absorbing portion, and thus the shock-absorbing portion receives an excessive load applied from the front of the vehicle, without receding toward the rear side of the vehicle body.

In some embodiments, the shock-absorbing portion may be configured such that a deformation amount of the shock-absorbing portion in response to a load applied from the front of the vehicle body is controllable by adjusting a rigidity of the shock-absorbing portion.

With the above configuration, the shock-absorbing portion has a configuration such that the deformation is controllable by adjusting the rigidity, and thus it is possible to mitigate shock applied to a leg part regardless of the magnitude of the load applied to the shock-absorbing portion. In other words, the shock-absorbing portion has a configuration such that the rigidity is adjusted so that a controlled deformation is achieved.

In some embodiments, the shock-absorbing portion may have a box shape and includes a reinforcement rib inside, and the rigidity of the shock-absorbing portion is adjustable through the number or a shape of the reinforcement rib.

With the above configuration, the rigidity of the absorbing portion can be adjusted by simply changing the interior structure of the shock-absorbing portion, which makes it possible to control the deformation amount at low cost by adjusting the rigidity.

The aforementioned "box shape" includes, for instance, an outer-surface shape of any geometric solid such a cuboid, a cube, and a sphere, and may be solid or hollow inside. In a case where the box shape is hollow, the interior space may be closed by partition walls, or may have at least one side open.

In some embodiments, the vehicle front structure further may include a reinforcement member of a column shape disposed between the shock-absorbing portion and the bumper, and formed integrally with the shock-absorbing portion and the bumper.

With the above configuration, providing the reinforcement member increases the supporting strength of the bumper, and thereby it is possible to suppress deterioration of the appearance of the vehicle front structure and a weight increase of a lower attachment portion of the bumper due to sagging of the bumper.

In some embodiments, the reinforcement member may be formed integrally with the grille support member, and the grille support member is mounted to the vehicle-body frame member at a position proximate to the reinforcement member.

With the above configuration, it is possible to increase the strength of the grille support member, and thereby it is possible to suppress deformation of the radiator grille toward the rear side of the vehicle body even if the radiator grille receives a load from the front of the vehicle body.

Accordingly, it is possible to suppress leaning of the upper-leg part toward the rear side of the vehicle body, and to suppress damage to a ligament of the pedestrian.

Furthermore, the reinforcement member is formed integrally with the grille support member mounted to the vehicle-body frame member at a position proximate to the reinforcement member, and thereby it is possible to further increase the support strength of the bumper achieved by the support member. Accordingly, it is possible to prevent sagging of the bumper.

In some embodiments, the reinforcement member may have an L-shaped cross section with an end portion remote from the grille support member bended toward the rear side with respect to the vehicle body.

With the above configuration, it is possible to enhance the strength of the reinforcement member with a simple structure and at low cost. Accordingly, it is possible to prevent sagging of the bumper effectively.

In some embodiments, the shock-absorbing portion may be disposed at a height corresponding to a height of an upper-leg part of a pedestrian and includes a flat receiving surface oriented toward the front of the vehicle body.

With the above configuration, even if the upper-leg part of the pedestrian hits the radiator grille, the radiator grille is supported by the shock-absorbing portion so that deformation toward the rear side of the vehicle body is suppressed, and thus it is possible to suppress leaning of the upper-leg part of the pedestrian toward the rear side of the vehicle body about the joint of the knee part. Accordingly, it is possible to suppress damage to the knee part.

Furthermore, since the front edge surface of the shock-absorbing portion has a flat surface, it is possible to support the radiator grille stably with the shock-absorbing portion. In this way, it is possible to receive leaning of the upper-leg part of the pedestrian toward the rear side of the vehicle body reliably with the radiator grille, and thus to minimize damage to the knee part including the ligament.

According to at least one embodiment of the present invention, it is possible to suppress leaning of an upper-leg part of a pedestrian toward the rear side of the vehicle body about a joint of a knee part with a simple structure and at low cost, and thereby to suppress damage to a ligament of the knee part. Furthermore, it is possible to mitigate shock to the leg part of the pedestrian and to suppress damage to the leg part.

### BRIEF DESCRIPTION OF DRAWINGS

FIG. 1 is a perspective view of a vehicle front structure according to an embodiment.
FIG. 2 is an enlarged view of section A in FIG. 1.
FIG. 3 is a cross-sectional view taken along line B-B in FIG. 2.
FIG. 4 is a back view as seen in direction C in FIG. 2.
FIG. 5 is a cross-sectional view taken along line D-D in FIG. 2.
FIG. 6A is an explanatory diagram where a pedestrian is in contact with a typical vehicle front structure. FIG. 6B is an explanatory diagram where a pedestrian is in contact with a vehicle front structure according to an embodiment.
FIG. 7 is a chart of an entry amount of a leg part of a pedestrian.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not intended to limit the scope of the present invention.

For example, the expressions about the relative or absolute arrangements, including "in the direction", "along the direction", "parallel", "perpendicular", "center", "concentric", "coaxial", and the like, indicate not only such positions strictly, but also the conditions that are relatively displaced by the tolerance or with the angle or distance that achieves the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

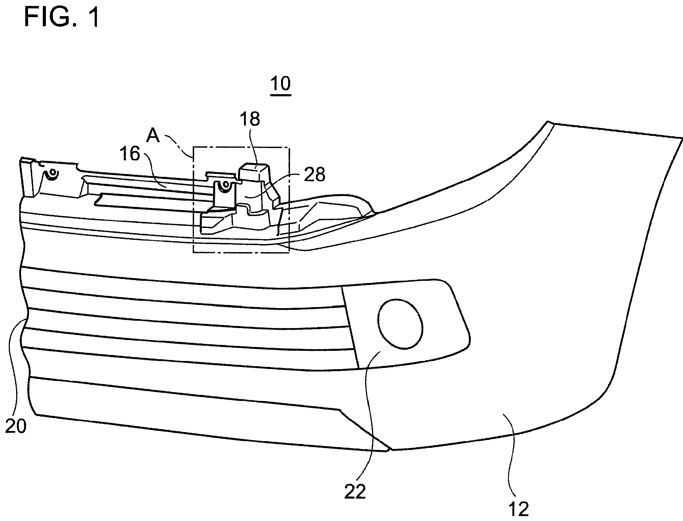

As depicted in FIGs. 1 to 3, a vehicle front structure 10 according to some embodiments of the present invention includes a bumper 12 disposed in front of a vehicle, a radiator grille 14 disposed in front of the vehicle, above the bumper 12 and behind the bumper 12 with respect to the vehicle body (i.e., behind the bumper 12 in a vehicle-length direction (longitudinal direction) of the vehicle body), and a grille support member 16 disposed behind the radiator grille 14 with respect to the vehicle body. In FIG. 1, the radiator grille 14 is not depicted.

Shock-absorbing portions 18 are disposed behind the radiator grille 14 with respect to the vehicle body, on either side of the grille support member 16 in the vehicle-width direction (transverse direction). The shock-absorbing portions 18 support the radiator grille 14 against a load F applied from the front of the vehicle body, and absorb the load F. The shock-absorbing portions 18 have a rigidity adjusted so as to be deformable in response to the load F applied from the front of the vehicle body, and are configured such that the deformation amount is controllable (such that a controlled deformation is achieved).

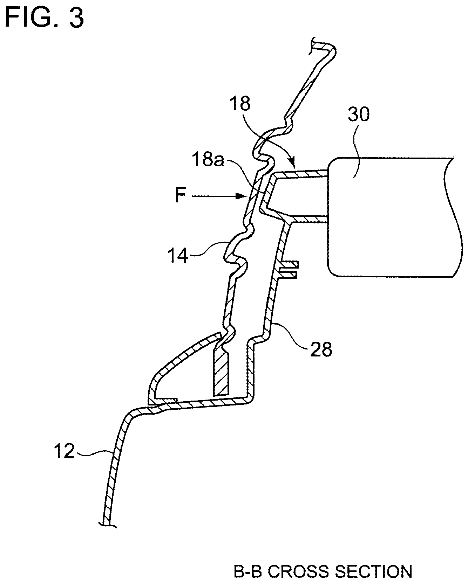

As depicted in FIG. 3, a vehicle-body frame member 30 having a high rigidity is disposed behind the shock-absorbing portion 18 with respect to the vehicle body. The vehicle-body frame member 30 supports the shock-absorbing portion 18 against a load applied from the front. Accordingly, if a load is applied to the shock-absorbing portion 18 from the front of the vehicle body, the vehicle-body frame member 30 supports the shock-absorbing portion 18, and thus the shock-absorbing portion 18 receives an excessive load applied from the front of the vehicle body while deforming so as to squash, without receding toward the rear side of the vehicle body.

In the depicted embodiment, the vehicle-body frame member 30 is provided as a side member disposed in the vehicle front-back direction, and the shock-absorbing portion 18 is disposed so as to be in contact with the front-end surface of the side member, and supported by the front-end surface of the side member.

Accordingly, as depicted in FIG. 6B, if a leg part of a pedestrian 100 comes into contact with a front-end section of the vehicle and the upper-leg part 106 of the pedestrian 100 comes into contact with the radiator grille 14, the radiator grille 14 is supported by the shock-absorbing portion 18, and deformation of the radiator grille 14 toward the rear of the vehicle body is suppressed. Thus, it is possible to suppress leaning of the upper-leg part 106 about the joint of the knee part 102 toward the rear side of the vehicle body.

Furthermore, the shock-absorbing portion 18 can absorb shock by deforming in response to the load F applied from the front of the vehicle body, and thus can mitigate shock applied to the upper-leg part 106 as a reaction force of the shock-absorbing portion 18.

The shock-absorbing portion 18 may be disposed so as to be in contact with the front-end surface of the vehicle-body frame member 30, or may be fixed to the front end surface of the vehicle-body frame member 30.

In the depicted embodiment, as depicted in FIG. 6B, a vehicle-body frame member 32 having a high rigidity is disposed behind the bumper 12 with respect to the vehicle body. The vehicle-body frame member 32 is, for instance, a cross member disposed in the vehicle-width direction.

In the embodiment depicted in FIGs. 1 to 3, the bumper 12 protrudes forward from the radiator grille 14 with respect to the vehicle body. That is, the bumper 12 is disposed foremost in the vehicle body, and the radiator grille 14 is disposed behind the bumper 12. As depicted in FIG. 6B, the height of the upper end of the bumper 12 is substantially flush with the knee part 102 of the pedestrian 100. A grille support member 16 extends in the vehicle-width direction above the bumper 12, and supports the radiator grille 14 from below. Furthermore, a lower front grille 20 is disposed in a region of the bumper 12, and a fog-lamp support panel 22 is disposed on each side of the lower front grille 20 in the vehicle-width direction.

It should be noted that FIG. 1 is a view of only the left half of the vehicle, and thus the shock-absorbing portion 18 disposed on the right side of the vehicle body is not depicted.

In an exemplary embodiment, the deformation amount of the shock-absorbing portion 18 can be controlled by adjusting the rigidity of the shock-absorbing portion 18.

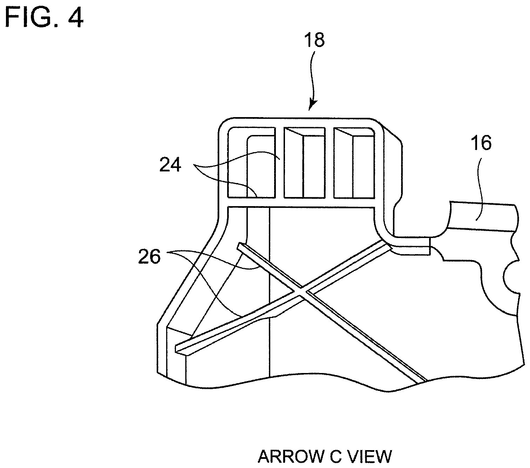

In an exemplary embodiment, as depicted in FIG. 4, the shock-absorbing portion 18 has a box shape and includes a reinforcement rib 24 inside. The deformation amount of the shock-absorbing portion 18 is controllable through the number or the shape of the reinforcement rib 24. In other words, by adjusting the number or the shape of the reinforcement rib 24, the deformation of the shock-absorbing portion 18 can be controlled.

In the embodiment depicted in FIG. 4, the shock-absorbing portion 18 has partition walls on three sides in a planar view, thereby having a quadrilateral cross-section with one side (rear side of vehicle body) open. A plurality of reinforcement ribs 24 is disposed inside the shock-absorbing portion 18, with opposite ends supported on the partition walls.

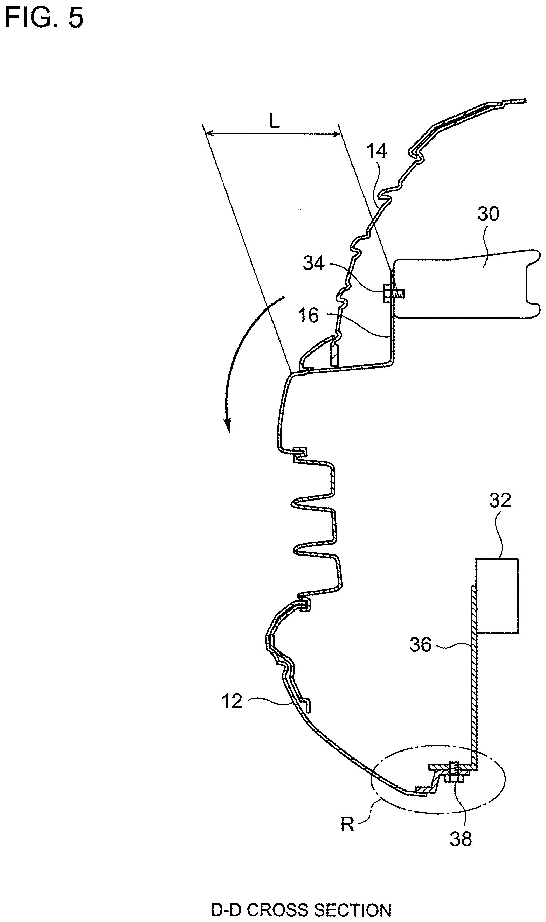

In an exemplary embodiment, as depicted in FIGs. 1 to 3, a reinforcement member 28 of a column shape is disposed between the bumper 12 and the shock-absorbing portion 18. The reinforcement member 28 is formed integrally with the shock-absorbing portion 18 and the bumper 12. With the reinforcement member 28, it is possible to increase the supporting strength of the bumper 12, and to suppress sagging of the bumper 12 described below with reference to FIG. 5.

In an exemplary embodiment, the reinforcement member 28 has a column shape with an axial direction extending in an upward-and-downward direction (perpendicular direction) of the vehicle body, and thus has an enhanced rigidity in the upward-and-downward direction of the vehicle body.

In an exemplary embodiment, as depicted in FIGs. 2 and 3, the shock-absorbing portion 18 is formed integrally with the grille support member 16.

Furthermore, as depicted in FIGs. 2 and 5, the grille support member 16 is mounted to the vehicle-body frame member 30 at a position proximate to the reinforcement member 28.

Accordingly, it is possible to increase the strength of the grille support member 16, and the radiator grille 14 is supported by the grille support member 16 even if the load F is applied to the radiator grille 14 from the front of the vehicle body, which makes it possible to suppress at least a certain amount of deformation of the radiator grille 14 toward the rear side of the vehicle body.

In the depicted embodiment, as depicted in FIG. 2, a bolt attachment hole 16a is formed on the grille support member 16. As depicted in FIG. 5, the grille support member 16 is mounted to the vehicle-body frame member 30 with a bolt 34 to be inserted through the bolt attachment hole 16a.

Furthermore, the lower end of the bumper 12 is joined to the frame 36 mounted to the vehicle-body frame member 32 with a bolt 38.

In an exemplary embodiment, the reinforcement member 28 has a column shape with an axial direction extending in the upward-and-downward direction of the vehicle body, and has an L-shaped cross section with an end portion remote from the grille support member 16 bended toward the rear side of the vehicle body.

Accordingly, it is possible to enhance the strength of the reinforcement member 28 with a simple structure and at low cost.

In the depicted embodiment, as depicted in FIG. 4, the reinforcement member 28 is also provided with one or more reinforcement ribs 26, and thereby it is possible to improve the strength of the reinforcement member 28.

In the exemplary embodiment, as depicted in FIG. 3, the shock-absorbing portion 18 is disposed at a height corresponding to that of the upper-leg part 106 of a pedestrian, and has a flat receiving surface 18a oriented toward the front of the vehicle body.

Accordingly, as depicted in FIG. 6B, if the upper-leg part 106 hits the radiator grille 14, the radiator grille 14 is supported by the shock-absorbing portions 18, and deformation toward the rear side of the vehicle body is suppressed. Thus, it is possible to suppress leaning of the upper-leg part 106 about the joint of the knee part 102 toward the rear side of the vehicle body.

In some embodiments, with the shock-absorbing portion 18, as depicted in FIG. 6B, it is possible to suppress leaning of the upper-leg part 106 about the joint of the knee part 102 toward the rear side of the vehicle body at least more than typical techniques, and thus it is possible to suppress an extension amount of a ligament of the knee part 102, which makes it possible to suppress damage to the ligament of the knee part including the ligament.

In the exemplary embodiment, the shock-absorbing portion 18 is disposed at a height corresponding to that of the upper-leg part 106 of a pedestrian, and thus it is possible to suppress leaning of the upper-leg part 106 toward the rear side of the vehicle body effectively. However, it is obvious that the position of the upper-leg part 106 of a pedestrian varies depending on the height or the physical constitution of the pedestrian. Thus, the installment height of the shock-absorbing portion 18 is determined on the basis of the height of the upper-leg part of an average adult, for instance.

Furthermore, besides mitigating shock to be applied to the upper-leg part 106 by the effect of deformation of the shock-absorbing portion 18, shock to be applied to leg parts can also be mitigated by controlling the deformation amount of the shock-absorbing portion 18, regardless of the magnitude of the load to be applied to the shock-absorbing portion 18.

Even in a case where the height of the upper-leg part of a pedestrian is not in an assumed range and the pedestrian is hit by the radiator grille 14 at the lower-leg part, the knee, or the waist, the effect of deformation of the shock-absorbing portion 18 can still mitigate shock to be applied to the hit portion of the pedestrian. Accordingly, the shock-absorbing portion 18 can exert the effect to mitigate shock on a pedestrian regardless of the height of the pedestrian, or the height and the shape of the bumper 12 and the radiator grille 14. Furthermore, the shock-absorbing portion 18 has a box shape and includes the reinforcement ribs 24 inside, which makes it possible to adjust the rigidity of the shock-absorbing portion 18 and to control the deformation amount at low cost.

Furthermore, the vehicle-body frame member 30 supports the shock-absorbing portion 18, and thus the shock-absorbing portion 18 receives an excessive load applied from the front of the vehicle, without receding toward the rear side of the vehicle body.

As depicted in FIG. 5, if the protruding amount L of the bumper 12 between the mounting position of the bumper 12 on the vehicle body (the position of the bolt 34) and the front end of the bumper 12 is large, the bumper 12 may incline in the direction of the arrow, which may lead to concentration of the weight of the bumper 110 at a lower attachment portion R and to sagging of the bumper 12. Such sagging may raise problems such as deterioration of the appearance, and a weight increase if the lower attachment portion R is reinforced.

In contrast, with an exemplary embodiment, the reinforcement member 28 of a column shape is disposed between the bumper 12 and the shock-absorbing portion 18, and thereby it is possible to increase the supporting strength of the bumper 12. Accordingly, it is possible to suppress deterioration of the appearance of the vehicle front structure and an increase in the weight of the lower attachment portion R (the periphery of the bolt 38) of the bumper 12 due to sagging of the bumper 12, as depicted in FIG. 5.

In an exemplary embodiment, the reinforcement member 28 has a column shape with an axial direction extending in the upward-and-downward direction of the vehicle body, and has an L-shaped cross section with an end portion remote from the grille support member 16 bended toward the rear side of the vehicle body. Thus, it is possible to increase the strength of the reinforcement member 28 with a simple structure and at low cost.

Furthermore, in an exemplary embodiment, the reinforcement member 28 is formed integrally with the grille support member 16, and as depicted in FIGs. 2 and 5, the grille support member 16 is mounted to the vehicle-body frame member 30 at a position proximate to the reinforcement member 28 with the bolt 34 inserted into the bolt attachment hole 16a, which makes it possible to increase the strength of the grille support member 16.

Accordingly, the radiator grille 14 is supported by the grille support member 16 even if the load F is applied from the front of the vehicle body, which makes it possible to suppress at least a certain amount of deformation of the radiator grille 14 toward the rear side of the vehicle body. Thus, as depicted in FIG. 6B, it is possible to suppress leaning of the upper-leg part 106 toward the rear side of the vehicle body, and to suppress damage to the ligament of the pedestrian 100.

Accordingly, it is possible to increase the supporting strength of the bumper 12, and to suppress deterioration of the appearance of the vehicle front structure and an increase in the weight of the lower attachment portion R (the periphery of the bolt 38) of the bumper 12 due to sagging of the bumper 12, as depicted in FIG. 5.

Furthermore, since the shock-absorbing portion 18 is disposed at a height corresponding to that of the upper-leg part 106 of a pedestrian, it is possible to suppress leaning of the upper-leg part 106 toward the rear side of the vehicle body effectively. Also, since the front end surface 18a of the shock-absorbing portion 18 is a flat surface (flat receiving surface), it is possible to support the radiator grille 14 stably and to receive leaning of the upper-leg part 106 toward the rear side of the vehicle body reliably with the radiator grille 14, thus minimizing the damage to the ligament.

As depicted in FIGs. 6A and 6B, as compared to the leaning angle "a" of the upper-leg part 106 of a typical vehicle front structure, the leaning angle "b" of the upper-leg part 106 according to the present embodiment is smaller.

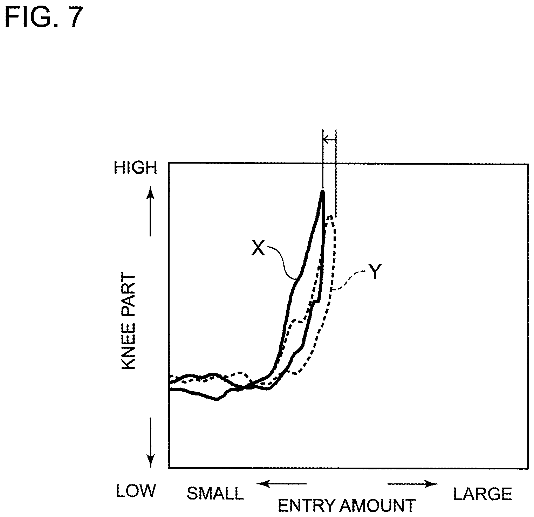

FIG. 7 is a chart of the entry amount of the upper-leg part 106 toward the rear side of the vehicle body, corresponding to the typical vehicle front structure depicted in FIG. 6A and an embodiment of the present invention depicted in FIG 6B. In the drawing, line X indicates the entry amount according to the above embodiment, and line Y indicates the entry amount of a typical example. As shown in the chart, the entry amount of the embodiment is smaller than that of the typical case.

### Industrial Applicability

According to at least one embodiment of the present invention, it is possible to provide a vehicle front structure whereby it is possible to suppress damage to a knee part of a pedestrian, and to reduce shock to the knee part, with a simple structure and at low cost.

## Claims

1. A vehicle front structure, comprising:
a bumper (12) disposed on a front section of a vehicle body so as to extend in a vehicle-width direction;
a radiator grille (14) disposed above the bumper and behind the bumper with respect to the vehicle body;
a grille support member (16) disposed behind the radiator grille with respect to the vehicle body and supporting the radiator grille; and
a vehicle-body frame member (30) disposed behind a shock-absorbing portion (18) with respect to the vehicle body, and configured to support the shock-absorbing portion against a load applied to the shock-absorbing portion from front,
**characterized in that**
the shock absorbing portion (18) is disposed on each side of the grille support member in the vehicle-width direction and behind the radiator grille with respect to the vehicle body, and configured to support the radiator grille against a load applied from front of the vehicle body and to absorb the load by receiving the load while deforming so as to squash.

2. The vehicle front structure according to claim 1,
wherein the shock-absorbing portion (18) is configured such that a deformation amount of the shock-absorbing portion in response to a load applied from the front of the vehicle body is controllable by adjusting a rigidity of the shock-absorbing portion.

3. The vehicle front structure according to claim 2,
wherein the shock-absorbing portion (18) has a box shape and includes a reinforcement rib (24) inside, and
wherein the rigidity of the shock-absorbing portion is adjustable through the number or a shape of the reinforcement rib.

4. The vehicle front structure according to any one of claims 1 to 3, further comprising
a reinforcement member (28) of a column shape disposed between the shock-absorbing portion (18) and the bumper (12), and formed integrally with the shock-absorbing portion (18) and the bumper (12).

5. The vehicle front structure according to claim 4,
wherein the reinforcement member (28) is formed integrally with the grille support member (16), and
wherein the grille support member is mounted to the vehicle-body frame member (30) at a position proximate to the reinforcement member.

6. The vehicle front structure according to any one of claims 1 to 5,
wherein the shock-absorbing portion (18) is disposed at a height corresponding to a height of an upper-leg part of a pedestrian and includes a flat receiving surface (18a) oriented toward the front of the vehicle body.

## Patentansprüche

1. Fahrzeugfrontstruktur, die aufweist:
einen Stoßfänger (12), der an einer Frontpartie einer Fahrzeugkarosserie so angeordnet ist, dass er sich in Fahrzeugbreitenrichtung erstreckt;
einen Kühlergrill (14), der über dem Stoßfänger und hinter dem Stoßfänger im Hinblick auf die Fahrzeugkarosserie angeordnet ist;
ein Grillstützelement (16), das hinter dem Kühlergrill im Hinblick auf die Fahrzeugkarosserie angeordnet ist und den Kühlergrill stützt; und
ein Fahrzeugkarosserie-Rahmenelement (30), das hinter einem Stoßdämpferabschnitt (18) im Hinblick auf die Fahrzeugkarosserie angeordnet und so konfiguriert ist, dass er den Stoßdämpferabschnitt gegen eine Last stützt, die auf den Stoßdämpferabschnitt von vorn ausgeübt wird,
**dadurch gekennzeichnet, dass**
der Stoßdämpferabschnitt (18) auf jeder Seite des Grillstützelements in Fahrzeugbreitenrichtung und hinter dem Kühlergrill im Hinblick auf die Fahrzeugkarosserie angeordnet und so konfiguriert ist, dass er den Kühlergrill gegen eine Last stützt, die von vorn auf die Fahrzeugkarosserie ausgeübt wird, und die Last dämpft, indem er die Last aufnimmt, während er sich so verformt, dass er gequetscht wird.

2. Fahrzeugfrontstruktur nach Anspruch 1,
wobei der Stoßdämpferabschnitt (18) so konfiguriert ist, dass ein Verformungsgrad des Stoßdämpferabschnitts als Reaktion auf eine von der Front der Fahrzeugkarosserie ausgeübte Last durch Einstellen einer Steifigkeit des Stoßdämpferabschnitts steuerbar ist.

3. Fahrzeugfrontstruktur nach Anspruch 2,
wobei der Stoßdämpferabschnitt (18) eine Kastenform hat und eine Verstärkungsrippe (24) im Inneren aufweist und
wobei die Steifigkeit des Stoßdämpferabschnitts über die Anzahl oder eine Form der Verstärkungsrippe einstellbar ist.

4. Fahrzeugfrontstruktur nach einem der Ansprüche 1 bis 3, die ferner aufweist:
ein Verstärkungselement (28) mit einer Säulenform, das zwischen dem Stoßdämpferabschnitt (18) und dem Stoßfänger (12) angeordnet und in einem Stück mit dem Stoßdämpferabschnitt (18) und dem Stoßfänger (12) ausgebildet ist.

5. Fahrzeugfrontstruktur nach Anspruch 4,
wobei das Verstärkungselement (28) in einem Stück mit dem Grillstützelement (16) ausgebildet ist und
wobei das Grillstützelement am Fahrzeugkarosserie-Rahmenelement (30) an einer Position nahe dem Verstärkungselement angebaut ist.

6. Fahrzeugfrontstruktur nach einem der Ansprüche 1 bis 5,
wobei der Stoßdämpferabschnitt (18) in einer Höhe angeordnet ist, die einer Höhe eines Oberschenkelteils eines Fußgängers entspricht, und eine flache Aufnahmefläche (18a) aufweist, die zur Front der Fahrzeugkarosserie orientiert ist.

## Revendications

1. Structure avant de véhicule, comprenant :
un pare-chocs (12) disposé sur une section avant d'une carrosserie de véhicule de façon à s'étendre dans une direction de largeur du véhicule ;
une grille de radiateur (14) disposée au-dessus du pare-chocs et derrière le pare-chocs par rapport à la carrosserie de véhicule ;
un organe de support de grille (16) disposé derrière la grille de radiateur par rapport à la carrosserie de véhicule et supportant la grille de radiateur ;
et un organe de cadre de carrosserie de véhicule (30) disposé derrière une partie d'absorption de chocs (18) par rapport à la carrosserie de véhicule, et configuré pour supporter la partie d'absorption de chocs contre une charge appliquée à la partie d'absorption de chocs à partir de l'avant,
**caractérisée en ce que**
la partie d'absorption de chocs (18) est disposée sur chaque côté de l'organe de support de grille dans la direction de largeur du véhicule et derrière la grille de radiateur par rapport à la carrosserie de véhicule, et configurée pour supporter la grille de radiateur contre une charge appliquée à partir de l'avant de la carrosserie de véhicule et pour absorber la charge par réception de la charge tout en se déformant de façon à s'écraser.

2. Structure avant de véhicule selon la revendication 1,
dans laquelle la partie d'absorption de chocs (18) est configurée de telle manière qu'une quantité de déformation de la partie d'absorption de chocs en réponse à une charge appliquée à partir de l'avant de la carrosserie de véhicule peut être régulée par ajustement d'une rigidité de la partie d'absorption de chocs.

3. Structure avant de véhicule selon la revendication 2,
dans laquelle la partie d'absorption de chocs (18) a une forme de boîte et inclut une nervure de renforcement (24) à l'intérieur, et
dans laquelle la rigidité de la partie d'absorption de chocs est ajustable par le biais du nombre ou d'une forme de la nervure de renforcement.

4. Structure avant de véhicule selon l'une quelconque des revendications 1 à 3, comprenant en outre
un organe de renforcement (28) en forme de colonne disposé entre la partie d'absorption de chocs (18) et le pare-chocs (12), et formé d'un seul tenant avec la partie d'absorption de chocs (18) et le pare-chocs (12).

5. Structure avant de véhicule selon la revendication 4,
dans laquelle l'organe de renforcement (28) est formé d'un seul tenant avec l'organe de support de grille (16), et
dans laquelle l'organe de support de grille est monté à l'organe de cadre de carrosserie de véhicule (30) en une position à proximité de l'organe de renforcement.

6. Structure avant de véhicule selon l'une quelconque des revendications 1 à 5,
dans laquelle la partie d'absorption de chocs (18) est disposée à une hauteur correspondant à une hauteur d'une partie de jambe supérieure d'un piéton et inclut une surface de réception plane (18a) orientée vers l'avant de la carrosserie de véhicule.
